(19) **Europäisches Patentamt**
**European Patent Office**
**Office européen des brevets**

(11) **EP 2 561 608 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(51) Int Cl.:
*H02P 7/00* (2006.01)     *H02P 7/285* (2006.01)
*G01P 3/48* (2006.01)

(21) Anmeldenummer: **11714221.6**

(22) Anmeldetag: **30.03.2011**

(86) Internationale Anmeldenummer:
**PCT/EP2011/001580**

(87) Internationale Veröffentlichungsnummer:
**WO 2011/131284 (27.10.2011 Gazette 2011/43)**

(54) **VERARBEITUNG EINER MOTORGRÖSSE EINES GLEICHSTROMMOTORS**

PROCESSING A MOTOR VARIABLE OF A DC MOTOR

TRAITEMENT D'UNE GRANDEUR D'UN MOTEUR À COURANT CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2010 DE 102010017835**

(43) Veröffentlichungstag der Anmeldung:
**27.02.2013 Patentblatt 2013/09**

(73) Patentinhaber: **Brose Fahrzeugteile GmbH & Co. Kommanditgesellschaft, Hallstadt**
**96103 Hallstadt (DE)**

(72) Erfinder: **KNEZEVIC, Jovan**
**80937 München (DE)**

(74) Vertreter: **FDST Patentanwälte**
**Nordostpark 16**
**90411 Nürnberg (DE)**

(56) Entgegenhaltungen:
**WO-A2-2010/028736     DE-A1- 10 028 035**
**DE-C1- 19 729 238**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Verarbeitung mindestens einer Motorgröße eines Gleichstrommotors einer Stelleinrichtung für ein Kraftfahrzeug, bei welchem der Ankerstrom sowie die Motorspannung erfasst und aus dem zeitlichen Verlauf des Ankerstrom durch Auszählen der darin enthaltenen Stromrippel die Stellposition eines Stellelementes ermittelt werden. Die Erfindung bezieht sich weiterhin auf eine nach dem Verfahren arbeitende Stelleinrichtung.

Bei einem modernen Kraftfahrzeug ist üblicherweise eine Vielzahl von motorischen Stelleinrichtungen vorhanden. Bei einer solchen Stelleinrichtung handelt es sich beispielsweise um einen elektrischen Fensterheber, eine elektrische Sitzverstellung oder eine Einrichtung zur motorischen Verstellung einer Fahrzeugtür, einer Heckklappe, eines Schiebedachs oder eines Cabrioverdecks.

Im Rahmen eines Stellvorgangs einer solchen Stelleinrichtung muss häufig eine gewünschte Endposition präzise angefahren werden. Hierzu ist eine genaue Kenntnis der Stellposition der Stelleinrichtung erforderlich. Die Kenntnis der aktuellen Stellposition oder hieraus ableitbarer Größen wie der Stellgeschwindigkeit (Motordrehzahl), der Stellrichtung (Motordrehrichtung) oder des zurückgelegten Stellwegs (Verstellweg) sind darüber hinaus häufig auch für die sichere Erkennung eines Einklemmfalls erforderlich.

Eine Stelleinrichtung der oben genannten Art wird häufig durch einen mechanisch kommutierten Gleichstrommotor (Kommutatormotor) betrieben. Bei einer solchen Stelleinrichtung kann die Stellposition durch Auszählung der so genannten Motor bzw. Ankerstromrippel ermittelt werden. Als Stromrippel wird hierbei eine charakteristische Welligkeit, d.h. eine periodische, pulsartige Schwankung des Motor- bzw. Ankerstroms bezeichnet, die durch die Kommutierung des Gleichstrommotors hervorgerufen wird. Die im Motor- bzw. Ankerstromsignal enthaltenen Stromrippel treten in einer der Anzahl der Kommutatorlamellen entsprechenden Häufigkeit auf, so dass eine Zählung der Stromrippel zuverlässig Aufschluss über die aktuelle (momentane) Drehstellung des Ankers (Rotors) und somit bezüglich der momentanen Position des vom Gleichstrommotor angetriebenen Stellelements innerhalb dessen vorbestimmten Verstellweges gibt.

Die Zählung der Stromrippel ist jedoch in der Regel nicht über die gesamte Länge eines typischen Stellvorgangs fehlerfrei möglich. So gliedert sich ein typischer Stellvorgang in eine initiale Anfahrphase (Anlaufphase) und in eine anschließende Gleichgewichtsphase (steady state) sowie in eine Freilaufphase und eine abschließende Bremsphase. Dabei geht der Anfahrphase erkanntermaßen eine Anfangsphase voraus, in welcher der Gleichstromotor bzw. dessen Ankerwicklung zwar bereits bestromt ist, der Anker (Rotor) sich jedoch noch nicht bewegt (also noch nicht rotiert) und der Gleichstromotor daher steht.

Während der Anfahrphase schwingt sich die Motorgeschwindigkeit auf eine stabile Endgeschwindigkeit ein. In der anschließenden Gleichgewichtsphase sind diese Endgeschwindigkeit und damit auch die Frequenz der Stromrippel annähernd konstant. Die Freilaufphase wird dadurch eingeleitet, dass zur Beendigung des Stellvorgangs beide Anschlüsse des Kommutatormotors auf Masse geschaltet werden. Die Freilaufphase erstreckt sich hierbei über die Dauer dieses Schaltvorgangs inklusive einer schaltbedingten Prellphase und dauert typischerweise etwa 3ms bis 4 ms. Aufgrund des Schaltvorgangs fließt in der Freilaufphase - bei im Wesentlichen unveränderter Stellgeschwindigkeit des Motors - kein oder ein nur äußerst irreproduzierbarer Ankerstrom (Motorstrom). Sobald beide Motorkontakte stabil auf Masse geschaltet sind, geht die Freilaufphase in die abschließende Bremsphase über. In der Bremsphase wird der über Masse kurzgeschlossene Elektromotor generatorisch betrieben und durch den so erzeugten Kreisstrom abgebremst.

Während innerhalb der Anfahrphase sowie insbesondere innerhalb der anschließenden Gleichgewichtsphase die Stromrippel aus dem zeitlichen Ankerstromsignal vergleichsweise zuverlässig zur Positionsbestimmung herangezogen werden können, stellt sich die Ermittlung des ersten (detektierbaren) Stromrippels zu Beginn der Anfahrphase, wenn sich der Motor bzw. dessen Anker zu drehen (zu bewegen) beginnt, als problematisch dar. Dies wiederum kann dazu führen, dass ein Rippelzähler (rippel counter) die Rippelzählung zu spät beginnt oder einen der ersten initiierten Stromrippel nicht berücksichtigt. Dies hat ein unerwünschtes Verzählen und somit eine zu vermeidende Abweichung der ermittelten Stellposition von der tatsächlichen Position des Stellelementes zur Folge.

Der Erfindung liegt die Aufgabe zugrunde, die Verarbeitung mindestens einer Motorgröße, insbesondere des Ankerstroms (Motorstroms), eines von einer Bordnetzgleichspannung versorgten Gleichstrommotors einer Stelleinrichtung für ein Kraftfahrzeug zu verbessern. Dabei soll insbesondere die Stromrippelerfassung bzw. -auswertung verbessert werden.

Die Erfindung geht von einem Verfahren aus, bei welchem der Ankerstrom sowie die Motorspannung des Gleichstrommotors erfasst und aus dem zeitlichen Verlauf des Ankerstroms (Ankerstromsignal) durch Auszählen der darin enthaltenen Stromrippel die Stellposition eines Stellelementes ermittelt werden.

Bezüglich eines Verfahrens zur Verarbeitung mindestens einer Motorgröße eines von einer Bordnetzgleichspannung versorgten Gleichstrommotors einer Stelleinrichtung für ein Kraftfahrzeug wird die genannte Aufgabe erfindungsgemäß gelöst durch die Merkmale des Anspruchs 1. Dabei ist vorgesehen, während einer Anfangsphase, in welcher der stehende Gleichstrommotor bereits bestromt wird, den über die Zeit ansteigenden Ankerstrom durch eine Funktion nachzubilden, die aus in einem Zeitintervall erfassten Wertepaaren der Motorspannung und des Anker stroms ermittelt wird. Daraus wird ein zu einem späteren Zeitpinkt erwarteter Stromwert des Ankerstroms extrapoliert. Bei einer Abweichung des zu diesem späteren Zeitpunkt erfassten Ankerstroms von dem extrapolierten Wert (des Ankerstroms) wird die Rippelzählung zur Erfassung der Stromrippel gestartet. Der Zählerstart erfolgt geeigneterweise mit der Anfahr- bzw. Anlaufphase, d.h. wenn der Gleichstrommotor anläuft (startet) und den ersten Stromrippel erzeugt.

Der Begriff "Motorgröße" bezeichnet hierbei allgemein eine beliebige Stromstärkeoder Spannungsgröße des Motor- bzw. Ankerstroms, die eine Aussage über den Betriebszustand der Stelleinrichtung zulässt, insbesondere eine Auszählung der Stromrippel. Bei der Motorgröße handelt es sich bevorzugt auch um die sogenannte Gegeninduktionsspannung, die auch als gegen-elektromotorische Kraft oder back-e.m.f. (E) bezeichnet wird. Ferner werden auch der Wicklungswiderstand der Ankerwicklung (Ankerwicklungswiderstand $R_a$) sowie die Ankerwicklungsinduktivität ($L_a$) und damit der Selbstinduktionsanteil der Motorspannung ($L_a \, dI_a/dt$) als Motorgröße herangezogen.

Die Erfindung geht von der Überlegung aus, dass einerseits während der Anfangsphase, in welcher der noch stehende Gleichstrommotor bereits bestromt wird, der Ankerstrom mit der Zeit zumindest annähernd linear ansteigt, und dass andererseits während dieser Anfangsphase aufgrund des sich noch nicht bewegenden Ankers des Gleichstrommotors die Gegeninduktionsspannung (E) gleich null ist. Somit kann aus der elektrischen Gleichung des Gleichstrommotors gemäß der Beziehung $Um = R_a \cdot I_a + L_a \cdot dI_a / dt + E$, mit $E = 0$, die Steigung des über die Zeit linear ansteigenden Ankerstroms anhand bereits zweier in einem Zeitintervall des linearen Stromanstiegs gemessener Strom- und Spannungswerte ermittelt werden. Anhand der Steigung wiederum kann ein zu einem späteren Zeitpunkt erwarteter Stromwert des Ankerstroms berechnet werden, wenn zu diesem späteren Zeitpunkt der Gleichstrommotor weiterhin stehen würde und demnach die Selbstinduktion und damit die Gegeninduktionsspannung weiterhin null ($E = 0$) ist. Weicht jedoch zu diesem späteren Zeitpunkt der erwartete Stromwert vom zum selben Zeitpunkt gemessenen und damit tatsächlichen Stromwert ab, so kann davon ausgegangen werden, dass sich der Motor zu diesem späteren Zeitpunkt bereits bewegt hat, was eine von null verschiedene Gegeninduktionsspannung ($E \neq 0$) zur Folge hat.

Um Toleranzen bzw. Messungenauigkeiten zu berücksichtigen, ist es vorteilhaft, wenn die zu dem späteren Zeitpunkt ermittelte Abweichung des bei stehendem Motor erwarteten Stromwertes vom tatsächlichen Stromwert des Ankerstroms mit einem (vorgebbaren) Referenz- oder Schwellwert verglichen wird. Der Schwellwert wird dabei geeigneterweise derart festgelegt, dass eine Motorbewegung bzw. Ankerdrehung tatsächlich erfolgt ist, der erste erwartete Stromrippel jedoch noch nicht aufgetreten ist. Wird dieser Schwellwert von der Abweichung (Differenz) des tatsächlichen Ankerstrom von dem extrapolierten Stromwert überschritten, so kann dieses Kriterium zur Initialisierung der Rippelzählung herangezogen werden. Dadurch ist sichergestellt, dass bereits der erste Stromrippel erkannt und ein Zählfehler durch Nichterkennung des ersten Stromrippels - oder eines nachfolgenden Stromrippels - vermieden ist.

Erkanntermaßen können anhand der elektrischen Gleichung des Gleichstrommotors, beispielsweise im Rahmen einer Referenzmessung des zeitlichen Ankerstromverlaufs während eines geeigneten Zeitintervalls anhand zweier zeitlich versetzter Messungen des Ankerstroms und der Ankerspannung der Wicklungswiderstand und die Wicklungsinduktion des Ankers berechnet werden. Sind diese Motorgrößen bekannt, so kann zuverlässig der erwartete Stromwert berechnet werden. Dieser wird zum Vergleich mit dem zu diesem späteren Zeitpunkt tatsächlich erfassten Ankerstromwerts herangezogen. Geeigneterweise werden daher aus zwei in dem Zeitintervall erfassten Wertepaaren der Motorspannung und des Ankerstroms einerseits der Ankerwicklungswiderstand sowie andererseits die Ankerwicklungsinduktivität ermittelt. Diese Größen (Ankerwicklungswiderstand und Ankerwicklungsinduktivität) werden dann zur Bestimmung des extrapolierten Ankerstroms zu dem späteren Zeitpunkt herangezogen.

Zur möglichst störungsfreien und exakten Ermittlung der Stromrippel während der Anfangsphase bzw. der Gleichlauf- oder Gleichgewichtsphase wird der Ankerstrom einem steuerbaren Frequenzfilter zugeführt, das ein drehzahlproportionales Ausgangssignal anhand der erfassten Stromrippel erzeugt. Dazu werden dem Frequenzfilter ein aus der Gegeninduktionsspannung ($E \neq 0$) des Gleichstrommotors ermitteltes Steuersignal sowie ein aus dem Ankerstromsignal und aus der Motorspannung abgeleitetes Filtereingangssignal zugeführt. Geeigneterweise wird dabei die Gegeninduktionsspannung aus der Motorspannung und dem Produkt aus dem Ankerstrom und dem Ankerwiderstand ermittelt.

Die Motorspannung wird geeigneterweise mit einem tiefpasscharakteristischen Filter gewichtet und daraus ein Korrektursignal abgeleitet. Das Filtersignal wird aus der Differenz des Ankerstromsignals und dem Korrektursignal der Motorspannung erzeugt. Dem steuerbaren Frequenzfilter wird zudem zweckmäßigerweise ein tiefpassgefiltertes Steuersignal zugeführt.

Gemäß einem weiteren Aspekt der Erfindung wird der Gleichstrommotor mittels eines Pulsweitenmodulationssignals (PWM-Signal) angesteuert, dessen Tastgrad in Abhängigkeit von Spannungsschwankungen der Bordnetzgleichspannung eingestellt wird. Hierdurch können Spannungsschwankungen der Bordnetz- bzw. Batteriespannung des Fahrzeugs herausgefiltert werden, die sich ansonsten auch im (gemessenen) Ankerstromsignal widerspiegeln würden. Derartige Spannungsschwankungen können im Frequenzbereich der Stromrippelfrequenz liegen, was zu Zählfehlern führen würde. Die Abtastfrequenz des PWM-Signals liegt geeigneterweise im Bereich von 20 kHz, was einer Periodendauer des PWM-Signals von $T_{PWM} = 50 \mu s$ entspricht.

In vorteilhafter Ausgestaltung dieser Spannungsfilterung wird anhand des Verhältnisses zwischen einer Referenzspannung und einer Filterspannung zunächst ein fester Tastgrad des PWM-Signals bestimmt. Dabei entspricht die Filterspannung der nominalen Bordnetzgleichspannung ohne Spannungsschwankungen. Je nach Abweichung der aktuellen Bordnetzgleichspannung von der Filterspannung zu einem vergleichsweise niedrigen oder vergleichsweise hohen Spannungswert wird der Tastgrad vergrößert bzw. verkleinert. Ist beispielsweise ein Tastgrad (duty cicle) von 70% bei nominaler Bordnetzgleichspannung eingestellt, so wird bei einer Spannungsschwankung auf einen Spannungswert unterhalb der nominalen Bordnetzgleichspannung der Tastgrad - praktisch in Echtzeit - beispielsweise auf 80% erhöht. Analog wird bei einer Abweichung der aktuellen Bordnetzgleichspannung zu einem die nominale Bordnetzspannung übersteigenden Spannungswert der Tastgrad - wiederum praktisch in Echtzeit - auf beispielsweise 50% oder 60% heruntergesetzt.

Die genannte Aufgabe wird zudem erfindungsgemäß gelöst durch eine Stelleinrichtung für ein Kraftfahrzeug mit einem von einer Bordnetzgleichspannung versorgten, mechanisch kommutierten Gleichstrommotor sowie mit einer Steuereinheit zur Ansteuerung des Gleichstrommotors. Die Steuereinheit ist dabei zur Durchführung des vorstehend beschriebenen Verfahrens eingerichtet, d.h. programm- und/oder schaltungstechnisch ausgebildet. Die Steuereinheit und/oder zur Durchführung des Verfahrens vorgesehene Funktionsbausteine (-blöcke) sind vorzugsweise durch einen Mikroprozessor (Mikrocontroller) gebildet.

In geeigneter Ausgestaltung der Stelleinrichtung ist der Gleichstrommotor in eine elektronische Brückenschaltung (H-Brücke) zwischen zwei Brückenzweige mit jeweils einem hochpotentialseitigen und einem niederpotentialseitigen Halbleiterschalter geschaltet. Deren Steuereingänge sind mit der Steuereinheit bzw. mit dem Mikrocontroller verbunden und werden von dieser bzw. von diesem mittels des PWM-Signals mit in Abhängigkeit von Spannungsschwankungen der Batterieoder Bordnetzgleichspannung veränderlichem Tastgrad angesteuert. Die Steuer einheit bzw. der Mikrocontoller ist dazu eingerichtet bzw. programmiert, einerseits während der Anfahrphase des bestromten, jedoch noch stehenden Gleichstrommotors einen zu einem bestimmten Zeitpunkt erwarteten Stromwert, insbesondere durch Extrapolation, zu berechnen. Andererseits ist die Steuereinheit bzw. der Mikroprozessor dazu eingerichtet bzw. programmiert, Spannungsschwankungen der Bordnetzspannung durch geeignete Veränderung des Tastgrades des PWM-Signals herauszufiltern, so dass der Gleichstrommotor praktisch mit konstanter, stör- bzw. schwankungsfreier Versorgungsspannung (Betriebsspannung) angesteuert und betrieben wird.

Nachfolgend werden Ausführungsbeispiele der Erfindung anhand einer Zeichnung näher erläutert. Darin zeigen:

Fig. 1    in einem Blockschaltbild schematisch die Funktionsblöcke einer Stelleinrichtung mit einer Steuereinheit zur Verarbeitung von Motorgrößen eines Gleichstrommotors,

Fig. 2    in einem schematischen Diagramm gegen die Zeit einen typischen Verlauf des Ankerstroms und der Ankerspannung des Gleichstrommotors während einer Anfangsphase und zu Beginn einer Anlaufphase,

Fig. 3    in einem weiteren Diagramm gegen die Zeit ein schwankungsbehaftetes Motorspannungssignal und ein zugehöriges Ankerstromsignal,

Fig. 4    in einem Diagramm gemäß Fig. 3 das ungefilterte und ein gefiltertes Motorspannungssignal,

Fig. 5    in einem Diagramm gegen die Zeit ein PWM-Signal mit festem Tastverhältnis,

Fig. 6    in einem Diagramm gemäß Fig. 5 ein PWM-Signal mit veränderten Tastverhältnissen, und

Fig. 7    in einem Strom-Zeit-Diagramm den Verlauf eines Filtereingangssignals und eines Filterausgangssignals der Steuereinheit.

Einander entsprechende Teile und Größen sind in allen Figuren mit den gleichen Bezugszeichen versehen.

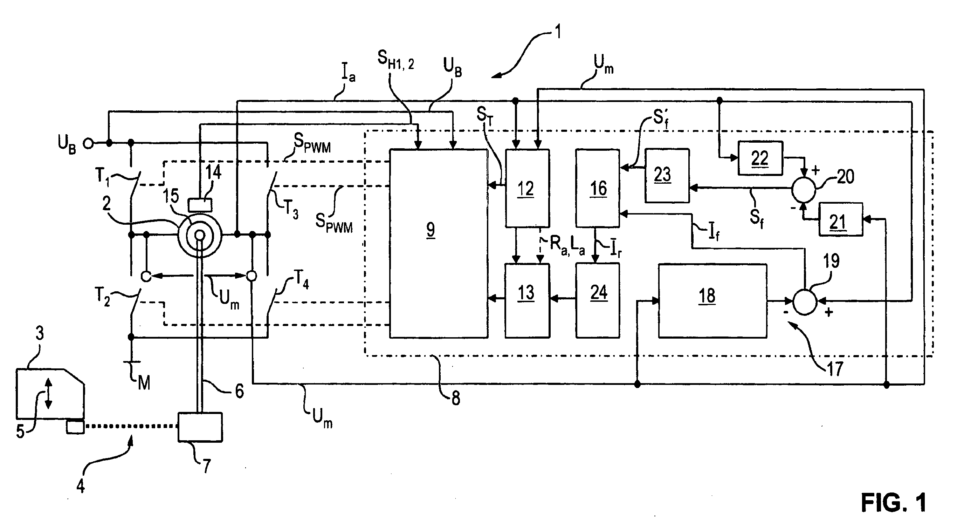

Das in Fig. 1 veranschaulichte Blockschaltbild repräsentiert die Funktionalität eines Verfahrens und einer Stelleinrichtung 1 zur Ermittlung der in einem Ankerstromsignal $I_a$ eines mechanisch kommutierten Gleichstrommotors 2 infolge dessen Kommutierung erzeugten Stromrippel. Der Gleichstrommotor 2 ist mit einer als Betriebsgleichspannung bezeichneten Batterie- oder Bordnetzgleichspannung $U_B$ eines Kraftfahrzeugs versorgt. Die Stromrippel oder Stromwelligkeiten sind als Wechselsignalanteil dem Gleichstromsignal des Gleichstrommotors 2 überlagert. Da die Anzahl der Kommutatorlamellen des Gleichstrommotors 2 bekannt ist, lässt sich aus der Anzahl der Stromrippel pro Zeiteinheit die Motordrehzahl und die Stellung des Motorankers (Ankerposition) bestimmen.

Die Ankerposition oder -stellung wiederum korrespondiert mit der Position eines vom Gleichstrommotor 2 angetriebenen Stellelementes 3 eines Kraftfahrzeuges. Somit lässt sich mit relativ einfachen Mitteln beispielsweise die Scheibenposition einer mittels eines Fensterheberantriebs als Stelleinrichtung 1 automatisch verstellbaren Fahrzeugscheibe als Stellelement 3 eines Kraftfahrzeugs entlang deren Verstellweg zwischen einer oberen Schließstellung und einer unteren Offenstellung genau bestimmen. Die Stelleinrichtung 1 umfasst dabei den Gleichstrommotor 3, der über eine Stellmechanik 4 derart mit der Fahrzeugscheibe 3 gekoppelt ist, dass diese innerhalb eines Stellbereiches (Verstellweg) 5 zwischen einer Offenstellung und einer Schließstellung verfahrbar ist.

Die Stellmechanik 4 umfasst eine mit einem auch als Rotor oder Läufer bezeichneten Anker des Gleichstrommotors 2 gekoppelte Antriebswelle 6, die über ein Getriebe 7 auf die Fahrzeugscheibe 3 wirkt. Die Stelleinrichtung 1 umfasst weiterhin eine durch einen Mikrocontroller gebildete oder einen solchen umfassende Steuereinheit 8. Die Steuereinheit 8 wirkt auf vier Halbleiterschalter $T_1$ bis $T_4$ einer als Tiefsetzsteller arbeitenden H-Brücke mit zwei Brückenzeigen mit jeweils einem hochpotentialseitigen ($+U_B$) Halbleiterschalter $T_1$, $T_3$ und einem niederpotentialseitigen (Masse M) Halbleiterschalter $T_2$ bzw. $T_4$. Der Gleichstrommotor 2 ist mit dessen Motoranschlüssen zwischen die Brückenzeige und dort zwischen die Halbleiterschalter $T_1$ und $T_2$ sowie $T_3$ und $T_4$ geschaltet. Bei der Betriebsspannung $U_B$ handelt es sich um die Batterie- oder Bordnetzgleichspannung des Kraftfahrzeugs.

Der Steuereinheit 8 sind eingangsseitig Messwerte $I_a$ und Um der Motor- oder Ankerstromstärke $I_a$ bzw. der Motorspannung Um sowie die Betriebsspannung $U_B$ oder ein hierzu proportionaler Messwert zugeführt. In der Steuereinheit 8 bzw. in deren Mikroprozessor 9 ist ein Steuerprogramm softwaretechnisch implementiert. Die Steuereinheit 8 enthält die nachfolgend näher beschriebenen Funktionsblöcke. Das Steuerprogramm des Mikrocontrollers 9 steuert einerseits durch Schalten der Halbleiterschalter $T_1$ bis $T_4$ den Gleichstrommotor 2 zur Durchführung von Stellvorgängen an, in Folge dessen die Fahrzeugscheibe 3 in Richtung der Öffnungs- oder Schließstellung verfahren wird. Hierzu erzeugt der Mikroprozessor 9 ein pulsweitenmoduliertes Steuersignal (PWM-Signal) $S_{PWM}$, das je nach Drehrichtung des Gleichstrommotors 2 dem hochpotentialseitigen Halbleiterschalter $T_1$ oder $T_3$ zugeführt wird, während der jeweilige niederpotentialseitige Halbleiterschalter $T_2$ bzw. $T_4$ vom Mikroprozessor 9 durchgeschaltet wird.

Im Betrieb des Gleichstrommotors 2 rotiert der Motoranker im Gleichstrommotor 2 innerhalb dessen Statorfeldes. Dadurch wird nach dem Generatorprinzip in den Ankerwicklungen (Ankerspulen) auch bei Motorbetrieb eine auch als Gegeninduktionsspannung (Gegen-EMK oder back-e.m.f.) E bezeichnete Spannung induziert, die entsprechend der Betriebsspannung $U_B$ gepolt ist und daher dem Ankerstrom $I_a$ entgegenwirkt. Die Gegeninduktionsspannung E ist linear abhängig von der Anker- bzw. Motordrehzahl und bewirkt bei einer Stromrichtungsumkehr des Ankerstroms $I_a$ einen generatorischen Motorbetrieb und kann daher zur Bremsung des Gleichstrommotors 2 dienen.

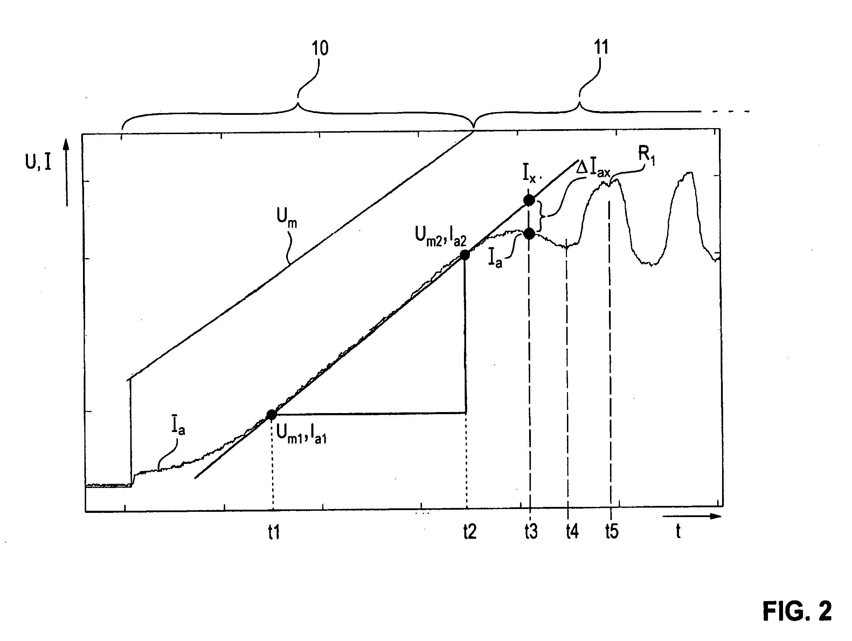

Bei Stillstand des Gleichstrommotors 2 und somit auch während einer Anfangsphase, in welcher der Gleichstrommotor 2 bzw. dessen Ankerwicklungen bereits bestromt sind, ist die Gegeninduktionsspannung E gleich null (E = 0). Der Wicklungswiderstand $R_a$ der Ankerwicklungen des Gleichstrommotors 2 ist vergleichsweise klein, so dass der Ankerstrom $I_a$ während der Anfangsphase bei noch nicht rotierendem Motoranker bis zu einem bestimmten Stromwert und dabei zumindest in einem bestimmten Zeitintervall $\Delta t = t_2 - t_1$ zumindest annähernd linear ansteigt. Dieser Stromanstieg des Ankerstroms $I_a$ während der Anfangsphase innerhalb des Zeitintervalles $\Delta t$ ist in Fig. 2 veranschaulicht.

Zur Verarbeitung der relevanten Motorgrößen, insbesondere des Ankerstroms im Hinblick auf eine zuverlässige Erfassung und Filterung sowie Zählung der im Ankerstrom (im zeitlichen Verlauf des Ankerstroms oder Ankerstromsignals) $I_a$ enthaltenen Stromrippel für eine möglichst exakte Drehlagenbestimmung des Motorankers des Gleichstrommotors 2 und Positionsbestimmung des Stellelementes (Fahrzeugscheibe) 3 wird die nachfolgende Gleichung (1) herangezogen, die das mathematische Modell des Gleichstrommotors 2 wiedergibt:

$$U_m = R_a \cdot I_a + L_a \cdot \frac{dI_a}{dt} + E \qquad (1)$$

Hierbei geben die Terme $L_a \cdot dI_a/dt$ die Selbstinduktionsspannung und E die Gegeninduktionsspannung an, wobei $L_a$ die Wicklungsinduktivität und $R_a$ der Wicklungswiderstand der Ankerwicklung sind. Um und $I_a$ sind die gemessene Motorspannung bzw. der gemessene Ankerstrom.

Während der in Fig. 2 dargestellten Anfangsphase 10 steigt der Ankerstrom $I_a$ linear mit der Zeit t an. Ebenso steigt in der Anfangsphase 10 auch die Motorspannung Um linear an. Während der Anfangsphase 10, in der in dem dargestellten Zeitintervall $\Delta_{t,2}$ zu den Zeitpunkten $t_1$ und $t_2$ jeweils ein Wertepaar $U_{m1}(G)$, $I_{a1}(t_1)$ und $U_{m2}(t_2)$, $I_{a2}(t_2)$ erfasst werden, kann die Steigung des in diesem Zeitintervall $\Delta t_{1,2}$ linearen Ankerstroms $I_a$ bestimmt (berechnet) werden. Diese Berechnung wird mittels des Mikroprozessors 9 und somit von der Steuereinheit 8 anhand der Gleichung (1) bestimmt (berechnet). Da in der Anfangsphase 10, in der der Gleichstrommotor 2 bzw. dessen Anker noch steht, jedoch bereits bestromt ist, ist die Gegeninduktionsspannung E gleich null (E = 0), so dass mit den nachfolgenden Beziehungen (Gleichungen) folgt:

$$U_{m1} = R_a I_{a1} + L_a \cdot \frac{dI_{a1}}{dt} \qquad (2)$$

$$U_{m2} = R_a \cdot I_{a2} + L_a \cdot \frac{dI_{a2}}{dt} \qquad (3)$$

$$\frac{dI_{a1}}{dt} = \frac{dI_{a2}}{dt} = \frac{I_{a2} - I_{a1}}{t_2 - t_1} \qquad (4)$$

$$U_{m2} - U_{m1} = R_a \cdot \left(I_{a2} - I_{a1}\right) \qquad (5)$$

$$R_a = \frac{\left(U_{m2} - U_{m1}\right)}{\left(I_{a2} - I_{a1}\right)} \qquad (6)$$

$$L_a = \frac{U_{m2} - R_a \cdot I_{a2}}{\left(\dfrac{I_{a2} - I_{a1}}{t_2 - t_1}\right)} \qquad (7)$$

$$\frac{dI_a}{dt} = \frac{1}{L_a}\left\{U_m - R_a(\theta) \cdot I_a - E\right\} \qquad (8)$$

Dabei kann der erste Rippel $R_1$ (Fig. 2) durch Beobachtung der Gleichung (8) erkannt werden. Dies ergibt sich daraus, dass sich der Gleichstrommotor 2 im Anschluss an die Anfangsphase 10 bewegt und demzufolge die Gegeninduktionsspannung ungleich null ($E \neq 0$) ist. Da zudem der Wicklungswiderstand $R_a$ der Ankerwicklung von der Anker- oder Rotorposition des Gleichstrommotors 2 abhängig ist, beeinflussen beide Effekte die Änderungen im Ankerstrom $I_a$. Dabei kann davon ausgegangen werden, dass der erste Stromrippel $R_1$ in der Anfahrphase 11 auftreten wird, wenn die in Fig. 2 angedeutete Stromänderung $\Delta I_{ax}$ einen bestimmten Schwellwert $I_S$ erreicht oder überschritten hat ($\Delta I_{ax} \geq I_S$).

Der Wert $\Delta I_{ax}$ ist die Abweichung des zum Zeitpunkt $t_3$ im Anschluss an die Anfangsphase 10 momentanen (gemessenen) Ankerstrom $I_a(t_3)$ von einem zu diesem Zeitpunkt $t_3$ erwarteten Stromwert $I_x$, der gemäß der nachfolgenden Beziehungen (Gleichungen) extrapoliert wird. Hierzu folgt aus den Gleichungen (1) bis (7) bei $E = 0$:

$$\frac{L_a(I_x - I_{a1,2})}{(t_3 - t_{1,2})} = U_x - R_a \cdot I_x \qquad (9)$$

$$(t_3 - t_{1,2}) = \Delta t \qquad (10)$$

$$I_x(t_3) = \frac{U_x \cdot \Delta t / L_a + I_{a1,2}}{1 + \dfrac{\Delta t \cdot R_a}{L_a}} \qquad (11)$$

6

$$\Delta I_{ax} = I_x(t_3) - I_a(t_3) \qquad\qquad (12)$$

Ist der von der Steuereinrichtung 8 bzw. vom Mikroprozessor 9 berechnete Wert $\Delta I_{ax}$ größer oder gleich einem bestimmten (vorgegebenen) Schwellwert $I_S$, so ist davon auszugehen, dass auf das zum Zeitpunkt $t_4$ erwartete Minimum ein den ersten Stromrippel $R_1$ charakterisierendes Maximum des Ankerstroms $I_a$ zum Zeitpunkt $t_5$ folgen wird.

Zur Erkennung des ersten Stromrippels $R_1$ und zur Parameterbestimmung gemäß den Gleichungen (1) bis (12) dient ein Funktions- oder Programmbaustein 12 (Fig. 1), dem der gemessene Ankerstrom $I_a$ und die gemessene Motorspannung Um zugeführt sind. Dieser Funktionsbaustein 12 liefert an den Mikroprozessor 9 ein Triggersignal $S_T$, wenn der erste Stromrippel $R_1$ erkannt bzw. detektiert worden ist. Der Funktionsbaustein 12 startet zudem einen Rippelzähler (Rippel Counter) 13, dem die ermittelten Motorgrößen $R_a$ (Ankerwicklungswiderstand) und $L_a$ (Ankerwicklungsinduktivität) zugeführt werden. Der Rippelzähler 13 wird demnach gestartet und der Mikroprozessor 9 getriggert, wenn der approximierte Stromwert $I_x$ vom zum selben Zeitpunkt $t_3$ gemessenen Ankerstrom $I_a$ abweicht und diese Abweichung $\Delta I_{ax}$ den vorgegebenen Schwellwert $I_S$ überschreitet. Anschließend zählt der Rippelzähler 13 die im Ankerstromsignal $I_a$ enthaltenen, während der Anfahrphase 11 und der darauf folgenden Gleichgewichtsphase detektierten Stromrippel $R_n$. Daraus ermittelt der Mikroprozessor 9 bzw. die Steuereinheit 8 die Drehzahl n bzw. die Drehgeschwindigkeit des Gleichstrommotors 2 und/oder die aktuelle Stellposition des Stellelementes (Fahrzeugscheibe) 3.

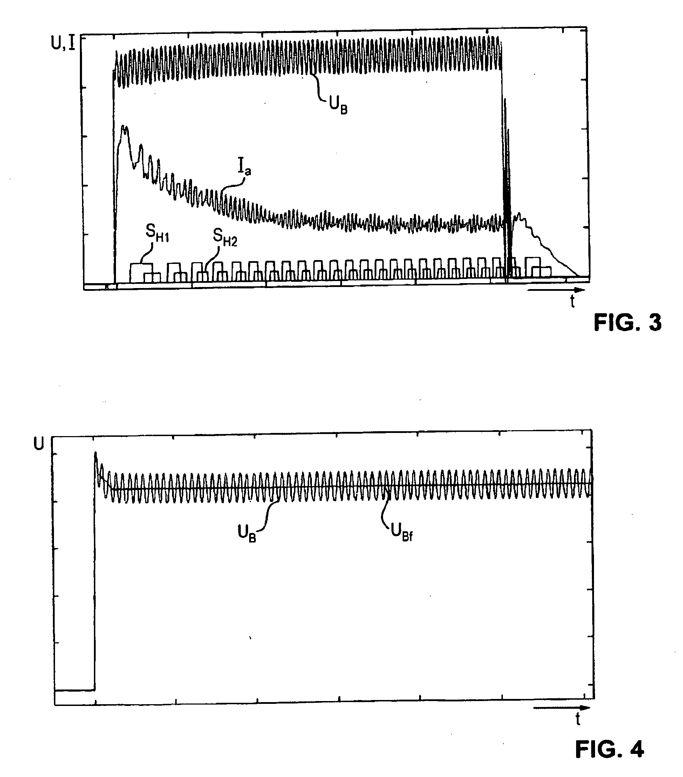

Dem Mikroprozessor 9 bzw. der Steuereinrichtung 8 können bedarfsweise auch Hall-Signale $S_{H1,2}$ (Fig. 3) zur Drehzahl-, Drehrichtungs- und/oder Positionsbestimmung des Gleichstrommotors 2 bzw. des Stellelementes (Fahrzeugscheibe) 3 zugeführt werden. Hierzu wirkt ein Hall-Sensor 14 mit einem anker- oder wellenfesten Ringmagnet 15 zusammen, der auf der Antriebs- bzw. Ankerwelle 6 des Gleichstrommotors 2 sitzt.

Anhand der Fig. 3 bis 6 wird nachfolgend ein weiterer Aspekt der Verarbeitung der Motorgrößen $U_B$, Um und $I_a$ beschrieben. Dieser Aspekt spiegelt den Umstand wider, dass die Betriebsspannung (Batterie- bzw. Bordnetzgleichspannung) $U_B$ des Gleichstrommotors 2 betriebsbedingten Spannungsschwankungen unterliegt. Dies ist in den Fig. 3 und 4 anhand des vom Mikroprozessor 9 verarbeiteten Spannungssignals (Betriebsspannung) $U_B$ verdeutlicht. Diese Spannungsschwankungen der Betriebsspannung $U_B$ spiegeln sich auch im Ankerstrom $I_a$ wider, wie dies im Diagramm gemäß Fig. 3 veranschaulicht ist. Liegen die Spannungsschwankungen im Frequenzbereich der Stromrippel $R_n$, so erschwert oder verhindert dies die exakte Ermittlung und Zählung der Stromrippel $R_n$.

Ziel der nachfolgend näher beschriebenen Maßnahme ist es daher, derartige Spannungsschwankungen zu eliminieren und hierzu die Betriebsspannung $U_B$ entsprechend zu filtern, um dem Gleichstrommotor 2 eine schwankungs- bzw. störungsfreie Betriebsspannung $U_{Bf}$ zur Verfügung zu stellen. Daher sieht dieser Aspekt der Erfindung vor, den Gleichstrommotor 2 mittels eines PWM-Signals $S_{PWM}$ anzusteuern und dessen Tastgrad $t_{on}/T_{PWM}$ in Abhängigkeit von den Spannungsschwankungen der Betriebsspannung $U_B$ einzustellen, d.h. den so genannten duty factor (Tastgrad) oder duty cycle (Tastverhältnis) zu verändern.

Hierzu sei von dem Ansatz ausgegangen, dass das Verhältnis zwischen einer Referenzspannung $U_R$ und der nachfolgend durchgehend als Betriebsspannung $U_B$ bezeichneten Bordnetz- bzw. Batteriegleichspannung 70% beträgt und hierbei die Betriebsspannung $U_B$ gleich der gefilterten Betriebsspannung $U_{Bf}$ ist. Mit dem Tastgrad ist dann $t_{on} = 0{,}7\ T_{PWM}$. Daraus folgt $t_{on} = U_R/U_{Bf} \cdot T_{PWM}$. Ist die aktuelle (momentane) Betriebsspannung $U_B$ ungleich der gefilterten Betriebsspannung $U_{Bf}$, so wird der Tastgrad $t_{on}/T_{PMW}$ je nach Abweichung vergrößert oder verkleinert. Hierzu gelten die Beziehungen

$$t_{on1} = \frac{U_{Bf}}{U_{inst}} \cdot t_{on} = \frac{U_{Bf}}{U_{Bf}} \cdot \frac{U_R}{U_{R1}} \cdot T_{PWM} \qquad\qquad (13)$$

$$t_{on1} = \frac{U_R}{U_{inst}} \cdot T_{PWM} \qquad\qquad (14)$$

Dabei sind $U_{Bf}$ die gefilterte Betriebsspannung, $U_R$ die Referenzspannung und $U_{inst}$ die momentane Spannungsabweichung von der Referenzspannung $U_R$ zu einem größeren oder kleineren Spannungswert hin. Dabei gilt die Beziehung gemäß Gleichung (14) für den Fall, dass $U_R \leq U_{Bf}$ ist.

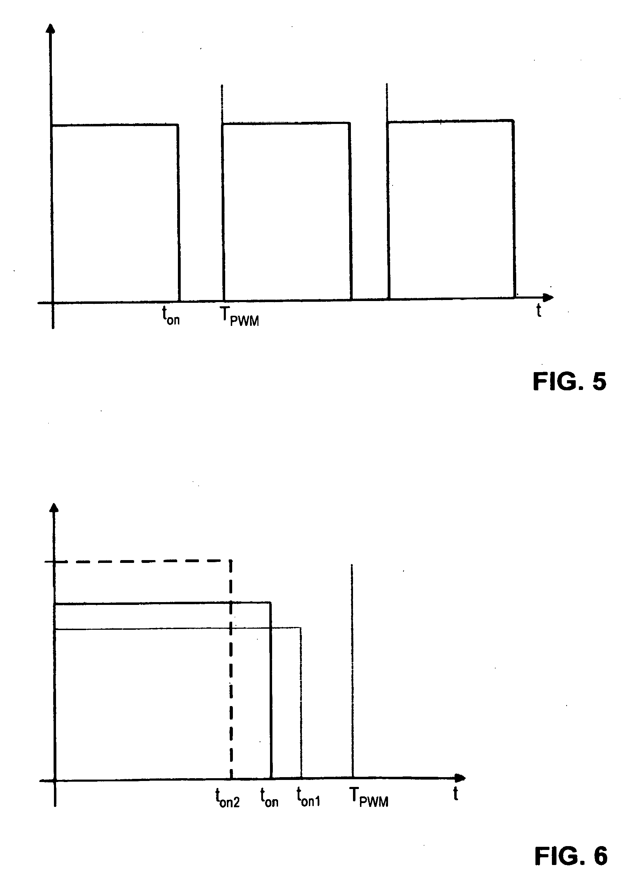

Der Tastgrad $t_{on}/T_{PWM}$ bei nominaler Betriebsspannung $U_B = U_{Bf}$ mit $t_{on} = 0{,}7\ T_{PWM}$ ist in Fig. 5 veranschaulicht.

Fig. 6 zeigt ein gegenüber diesem nominellen Tastgrad $t_{on}/T_{PWM}$ = 70% veränderten Tastgrad von beispielsweise $t_{on1}/T_{PWM}$ = 80% und $t_{on2}/T_{PWM}$ = 60%. Der gegenüber dem nominellen Tastgrad (70%) verkleinerte Tastgrad von 60% kompensieirt eine momentane Spannungsschwankung zu einem im Vergleich zur nominellen Betriebsspannung $U_B$ von beispielsweise 12V größeren Spannungswert von beispielsweise 13V. Analog wird durch die Vergrößerung des Tastgrades auf 80% eine Spannungsabweichung zu einem kleineren Spannungswert von beispielsweise 11 V kompensiert.

Indem die Abtastfrequenz $f_s$ = $1/t_s$ geeigneterweise auf 20 kHz und damit die Abtastzeit $t_s$ bzw. die Periodendauer $T_{PWM}$ auf 50μs eingestellt ist, erfolgt die Anpassung des Tastgrades des PWM-Signals $S_{PWM}$ in Abhängigkeit von den Spannungsschwankungen praktisch in Echtzeit, was zu einer entsprechend präzisen Filterung der Betriebsspannung $U_B$ und somit zu einer entsprechend schwankungsfreien (gefilterten) Betriebsspannung $U_{Bf}$ führt. Dies wiederum hat zur Folge, dass auch der Ankerstrom $I_a$ praktisch schwankungsfrei ist, was letztendlich zu einer präzisen Erkennung und Zählung der darin enthaltenen Stromrippel $R_n$ führt.

Ein weiterer Aspekt der Verarbeitung der Motorgrößen $I_a$ und Um ist eine geeignete Filterung des Ankerstroms $I_a$, um die in diesem enthaltenen Stromrippel $R_n$ möglichst fehlerfrei zu zählen und somit ein entsprechend präzises drehzahlproportionales Ausgangssignal zu erhalten. Hierzu umfasst die Steuereinheit 8 als weiteren Funktionsbaustein einen einstellbaren Frequenzfilter 16 in Form vorzugsweise eines abstimmbaren Bandpasses. Die Frequenz $f_{BW}$ des einstellbaren Bandpasses ist bestimmt durch die Beziehung:

$$f_{BW} = n = k \cdot E \qquad (15),$$

mit

$$E = U_m - R_a \cdot I_a \qquad (16)$$

Dabei ist n die Motordrehzahl des Gleichstrommotors 2. Hieraus kann ausgehend von Gleichung (1) auf die in der Druckschrift WO 2010/028736 A2 beschriebenen Art und Weise der Ankerstromverlauf $I_a$ ermittelt werden, wobei diesbezüglich auf die mathematische Herleitung gemäß den Gleichungen (4) bis (7) auf den Seiten 9 und 10 dieser Druckschrift WO 2010/028736 A2 Bezug genommen wird.

Demnach lässt sich ein Filtereingangssignal $I_f$ ermitteln, dass dem Frequenzfilters 16 signaleingangsseitig zugeführt wird. Hierzu ist ein Funktionsbaustein 17 mit einem Multiplizierer 18 und mit einer Subtraktionsstufe (Subtrahierer) 19 dem Frequenzfilter 16 signaleingangsseitig vorgeordnet. Dem Subtrahierer 19 werden das erfasste Ankerstromsignal $I_a$ direkt und die Motorspannung $U_m$ über den Multiplizierer 18 zugeführt, in dem eine Wichtung der gemessenen Motorspannung Um mit dem Faktor

$$A = \frac{1/R_a}{(1 + sL_a/R_a)}$$

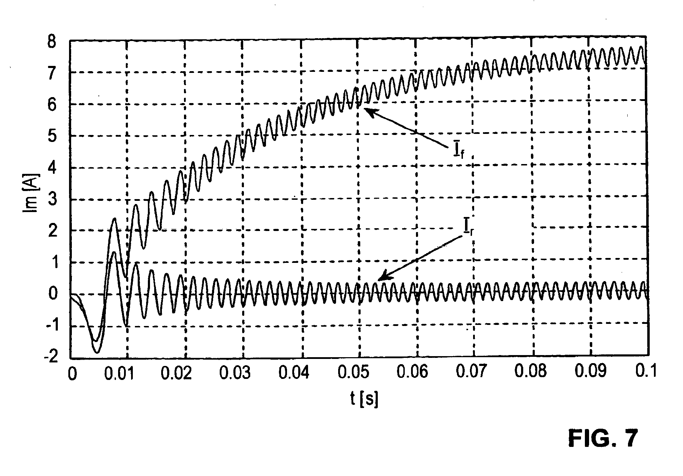

erfolgt. Dieser Term entspricht einem Tiefpass bzw. einer Tiefpassfunktionalität erster Ordnung und bildet daher einen tiefpasscharakteristischen Faktor A. Das gewichtete Signal A · Um wird in dem Subtrahierer 19 vom erfassten Ankerstromsignal $I_a$ subtrahiert. Das Differenzsignale, dessen typischer Verlauf in Fig. 7 veranschaulicht ist, wird dem Frequenzfilter 16 als Filtereingangssignal $I_f$ zugeführt.

Das dem Filterbausteins 16 steuereingangsseitig zu dessen Frequenzbestimmung bzw. Grenz- oder Mittenfrequenzeinstellung zugeführte Nutz- oder Steuersignal $S'_f$ (back-EMF-signal) wird durch Differenzbildung in einem weiteren Funktionsbaustein ermittelt, dem ebenfalls sowohl das Ankerstromsignal $I_a$ als auch die Motorspannung Um zugeführt sind. Dieser Funktionsbaustein umfasst wiederum eine Subtraktionsstufe (Subtrahierer) 20. Zur Multiplikation sowohl der Motorspannung Um mit einem Faktor p/K als auch des Ankerstromsignal $I_a$ mit den Faktoren p/K bzw. p/k · $R_a$ gemäß den Beziehungen $S_f$ = $f_{BW}$ = n · p = k · E und $S_f$ = p/k · $U_m$ - p/k · $R_a$ · $I_a$ sind jeweils ein Multiplizierer 21, 22 vorgesehen. Dabei ist p die Polzahl (Kommutatorlamellen- oder -nutenzahl) des Gleichstrommotors 2. Das Signal $S_f$ wird einem Tiefpassfilter 23 zugeführt, der ausgangsseitig das Steuersignal $S'_f$ liefert. Dieses tiefpassgefilterte Steuersignal $S'_f$ wird dem Filterbausteins 16 steuereingangsseitig zugeführt. Das infolge der Frequenzfilterung generierte und am Frequenzfilter 16 signalausgangsseitig abgreifbare drehzahlproportionale Ausgangssignal (Rippelsignal) $I_r$ ist in Fig. 7 ebenfalls veranschaulicht.

Da die Motorspannung Um im Filtereingangssignal $I_f$ und somit in der Filteroperation des Filterbausteins 16 enthalten ist, ist die Genauigkeit der Rippelzählung beim so genannten rippel-counting erhöht. Hierzu ist dem Filterbaustein 16 ein Digitalisierungsbaustein 24 zur Digitalisierung des Ausgangssignals $I_r$ nachgeschaltet. Der Digitalisierungsbaustein 24, an dem die Information bezüglich der (relativen) Position des Stellelementes 3 abgreifbar ist, ist ausgangsseitig mit dem Rippelzähler 13 verbunden oder Bestandteil desselben.

Die Einbindung oder Berücksichtigung der Motorspannung Um in das Filtereingangssignal $I_f$ einerseits sowie in das Steuersignal $S_f$ des Filterbausteins 16 andererseits berücksichtigt die wichtigen Informationen zum Schalt- bzw. Einschaltzustand oder anderen, sich in der Motorspannung Um widerspiegelnden Motorstöreinflüssen. Die zusätzliche Tiefpassfilterung des Nutz- oder Steuersignals $S_f$ vermeidet eine fehlerhafte Abstimmung der Filterfrequenz des Bandpassfilters 16, so dass praktisch jeder vorhandene Stromrippel $R_n$ auch erfasst wird. Durch diese Tiefpassfilterung wird die Steuerfrequenz des Steuersignals $S_f$ geglättet und die Filterfunktion des Bandpassfilters 16 stabilisiert.

Die Funktionsbausteine 16 bis 24 sowie 12 und 13 sind insbesondere in Form von Software-Bausteinen und daher funktionalen Bestandteilen einer in der Steuereinheit 8 bzw. in dem Mikrocontroller 9 implementierten Software realisiert. Dabei können alle oder nur einige der Funktionsbausteine 16 bis 24 sowie 12 und 13 im Mikrocontroller 9 als Software implementiert sein, während dann die verbleibenden Funktionsbausteine in der Software der Steuereinheit 8 realisiert sind.

<div align="center">Bezugszeichenliste</div>

| | | | | |
|---|---|---|---|---|
| 1 | Stelleinrichtung | | $I_a$ | Ankerstrom |
| 2 | Gleichstrommotor | | $I_f$ | Filtereingangssignal |
| 3 | Stellelement/Fahrzeugscheibe | | $I_r$ | Ausgangs-/Rippelsignal |
| 4 | Stellmechanik | | $R_1$ | erster Stromrippel |
| 5 | Stellbereich Nerstellweg | | $R_n$ | Stromrippel |
| 6 | Antriebswelle | | $S_f$ | Steuer-/Nutzsignal |
| 7 | Getriebe | | $S'_f$ | Steuersignal |
| 8 | Steuereinrichtung | | $S_{H1,2}$ | Hall-Signal |
| 9 | Mikroproz:essor | | $S_{PWM}$ | PWM-Signal |
| 10 | Anfangsphase | | $S_T$ | Triggersignal |
| 11 | Anfahr-/Anlaufphase | | $T_{1-4}$ | Halbleiterschalter |
| 12 | Funktionsbaustein | | $U_B$ | Betriebsspannung |
| 13 | Rippelzähler | | $U_m$ | Motorspannung |
| 14 | Hall-Sensor | | | |
| 15 | Ringmagnet | | | |
| 16 | Frequenzfilter/Bandpass | | | |
| 17 | Funktionsbaustein | | | |
| 18 | Multiplizierer | | | |
| 19 | Subtrahierer | | | |
| 20 | Subtrahierer | | | |
| 21 | Multiplizierer | | | |
| 22 | Multiplizierer | | | |
| 23 | Tiefpassfilter | | | |
| 24 | Digitalisierungsbaustein | | | |

**Patentansprüche**

1. Verfahren zur Verarbeitung mindestens einer Motorgröße ($I_a$, Um) eines von einer Bordnetzgleichspannung ($U_B$) versorgten, mechanisch kommutierten Gleichstrommotors (2) einer Stelleinrichtung (1) für ein Kraftfahrzeug, bei welchem der Ankerstrom ($I_a$) sowie die Motorspannung (Um) des Gleichstrommotors (2) erfasst und aus dem zeitlichen Verlauf ($I_a(t)$) des Ankerstroms ($I_a$) durch Auszählen der darin enthaltenen Stromrippel ($R_n$) die Stellposition eines Stellelementes (3) ermittelt werden,

   - wobei während einer Anfangsphase (10), in welcher der stehende Gleichstrommotor (2) bestromt wird, der über die Zeit (t) ansteigende Ankerstrom ($I_a$) durch eine aus in einem Zeitintervall ($\Delta t_{1,2}$) erfassten Wertepaaren ($U_{m1,2}$, $I_{a1,2}$) der Motorspannung ($U_{m1,2}$) und des Ankerstroms ($I_{a1,2,}$) ermittelte Funktion nachgebildet und daraus ein zu einem späteren Zeitpinkt ($t_3$) erwarteter Stromwert ($I_x$) des Ankerstroms ($I_a$) extrapoliert wird, und

- wobei bei einer Abweichung ($\Delta I_{ax}$) des zu diesem späteren Zeitpunkt ($t_3$) erfassten Ankerstroms ($I_a$) von dem extrapolierten Ankerstroms ($I_x$) eine Rippelzählung zur Erfassung der Stromrippel ($R_n$), insbesondere des bei anlaufendem Gleichstrommotor (2) erzeugten ersten Stromrippels ($R_1$), gestartet wird.

2. Verfahren nach Anspruch 1, bei welchem aus zwei in dem Zeitintervall ($\Delta t_{1,2}$) erfassten Wertepaaren ($U_{m1,2}$, $I_{a1,2}$) der Motorspannung ($U_{m1,2}$) und des Ankerstroms ($I_{a1,2}$) der Ankerwicklungswiderstand ($R_a$) und die Ankerwicklungsinduktivität ($L_a$) zur Bestimmung des extrapolierten Ankerstroms ($I_x$) zu dem späteren Zeitpunkt ($t_3$) ermittelt werden.

3. Verfahren nach Anspruch 1 oder 2,

   - wobei während einer an die Anfangsphase (10) anschließenden Anlaufund/oder Gleichlaufphase (11) der Ankerstrom ($I_a$) einem steuerbaren Frequenzfilter (16) zugeführt wird, das ein drehzahlproportionales Ausgangssignal ($I_r$) erzeugt, und
   - wobei dem Frequenzfilter (16) ein aus der Gegeninduktionsspannung (E) des Gleichstrommotors (3) ermitteltes Steuersignal ($S'_f$) sowie ein aus dem Ankerstromsignal ($I_a$) und aus der Motorspannung (Um) abgeleitetes Filtereingangssignal ($I_f$) zugeführt wird.

4. Verfahren nach Anspruch 3, wobei die Gegeninduktionsspannung (E) aus der Motorspannung (Um) und dem Produkt aus dem Ankerstrom ($I_a$) und dem Ankerwiderstand ($R_a$) ermittelt wird.

5. Verfahren nach einem der Ansprüche 2 bis 4, wobei dem steuerbaren Frequenzfilter (16) ein tiefpassgefiltertes Steuersignal ($S'_f$) zugeführt wird.

6. Verfahren nach einem der Ansprüche 1 bis 5, wobei der Gleichstrommotor (2) mittels eines Pulsweitenmodulationssignals ($S_{PWM}$) angesteuert wird, dessen Tastgrad ($t_{on}/T_{PWM}$) in Abhängigkeit von Spannungsschwankungen der Bordnetzgleichspannung ($U_B$) eingestellt wird.

7. Verfahren nach Anspruch 6,

   - wobei anhand des Verhältnisses zwischen einer Referenzspannung ($U_R$) und einer Filterspannung ($U_{Bf}$) ein fester Tastgrad ($t_{on}/T_{PWM}$) des Pulsweitenmodulationssignals ($S_{PWM}$) eingestellt wird,
   - wobei die Filterspannung ($U_{Bf}$) der nominalen Bordnetzspannung ($U_B$) entspricht, und
   - wobei je nach Abweichung der aktuellen Bordnetzgleichspannung ($U_{inst}$) von der Filterspannung ($U_{Bf}$) der Tastgrad ($t_{on1,2}/T_{PWM}$) vergrößert oder verkleinert wird.

8. Stelleinrichtung (1) für ein Kraftfahrzeug, mit einem von einer Bordnetzgleichspannung ($U_B$) versorgten, mechanisch kommutierten Gleichstrommotor (2) sowie mit einer Steuereinheit (8,9) zur Ansteuerung des Gleichstrommotors (2), die zur Durchführung des Verfahrens nach Anspruch einem der Ansprüche 1 bis 7 eingerichtet ist.

9. Stelleinrichtung (1) nach Anspruch 8, bei welcher der Gleichstrommotor (2) in eine als Tiefsetzsteller arbeitende Brückenschaltung zwischen zwei Brückenzweige mit jeweils einem hochpotentialseitigen Halbleiterschalter ($T_1$, $T_3$) und einem niederpotentialseitigen Halbleiterschalter ($T_2$, $T_4$) geschaltet ist, die steuereingangsseitig mit der Steuereinheit (8,9) verbunden sind.

10. Stelleinrichtung (1) nach Anspruch 9, bei welcher die Steuereinheit (8) einen Mikroprozessor (9) und einen diesem zugeordneten Rippelzähler (13) umfasst, der mit dem ersten detektierten Stromrippel ($R_1$) gestartet wird.

**Claims**

1. Method to process at least one motor variable ($I_a$, $U_m$) of a mechanically commutated direct current motor (2) of an actuating device (1) for a motor vehicle which is supplied by a direct current network voltage ($U_B$), in which the armature current ($I_a$) and the motor voltage ($U_m$) of the direct current motor (2) are detected and the actuating position of an actuating element (3) is determined from the chronological course ($I_a(t)$) of the armature current ($I_a$) by counting the current ripples ($R_n$) contained therein,

   - wherein, during an initial phase (10), in which the stationary direct current motor (2) is supplied with current,

the armature current ($I_a$) that increases with time (t) is reproduced by a function determined from a value pair ($U_{m1,2}$, $I_{a1,2}$) of the motor voltage ($U_{m1,2}$) and of the armature current ($I_{a1,2}$) detected in a time interval ($\Delta t_{1,2}$), and from this a current value (In) of the armature current ($I_a$) that is expected at a later point in time ($t_3$) is extrapolated, and

- wherein, in the case of a deviation ($\Delta I_{ax}$) of the armature current ($I_a$) detected at this later point in time ($t_3$) from the extrapolated armature current ($I_x$), a ripple count is started to detect the current ripples ($R_n$), in particular the first current ripple ($R_1$) generated when the direct current motor (2) is running.

2. Method according to claim 1, in which the armature winding resistance ($R_a$) and the armature winding induction ($L_a$) are determined from two value pairs ($U_{m1,2}$, $I_{a1,2}$) of the motor voltage ($U_{m1,2}$) and the armature current ($I_{a1,2}$) detected in the time interval ($\Delta t_{1,2}$) to determine the extrapolated armature current ($I_x$) at the later point in time ($t_3$).

3. Method according to claim 1 or 2,

   - wherein, during a start-up and/or synchronisation phase (11) following the initial phase (10), the armature current ($I_a$) is supplied to a controllable frequency filter (16) which generates an output signal ($I_r$) proportional to rotational speed, and
   - wherein a control signal ($S'_f$) determined from the inductive reactance voltage (E) of the direct current motor (3) as well as a filter input signal (If) derived from the armature current signal ($I_a$) and from the motor voltage ($U_m$) is supplied to the frequency filter (16).

4. Method according to claim 3, wherein the inductive reactance voltage (E) is determined from the motor voltage ($U_m$) and the product of the armature current ($I_a$) and the armature resistance ($R_a$).

5. Method according to one of claims 2 to 4, wherein a low pass filtered control signal ($S'_f$) is supplied to the controllable frequency filter (16).

6. Method according to one of claims 1 to 5, wherein the direct current motor (2) is controlled by means of a pulse width modulation signal ($S_{PWM}$), the duty cycle ($t_{on}/T_{PWM}$) of which is adjusted depending on the voltage fluctuations of the direct current network voltage ($U_B$).

7. Method according to claim 6,

   - wherein a fixed duty cycle ($t_{on}/T_{PWM}$) of the pulse width modulation signal ($S_{PWM}$) is adjusted by means of the ratio of a reference voltage ($U_R$) to a filter voltage ($U_{Bf}$),
   - wherein the filter voltage ($U_{Bf}$) corresponds to the nominal direct current network voltage ($U_B$), and
   - wherein the duty cycle ($t_{on1,2}/T_{PWM}$) increases or decreases according to the deviation of the current direct current network voltage ($U_{inst}$) from the filter voltage ($U_{Bf}$).

8. Actuating device (1) for a motor vehicle having a mechanically commutated direct current motor (2) that is supplied with a direct current network voltage ($U_B$), and having a control unit (8, 9) to control the direct current motor (2), which is set up to implement the method according to what is claimed in one of claims 1 to 7.

9. Actuating device (1) according to claim 8, in which the direct current motor (2) is switched into a bridge circuit working as a buck converter between two bridge arms, each having one high-potential-side semiconductor switch ($T_1$, $T_3$) and one low-potential-side semiconductor switch ($T_2$, $T_4$), which are connected to the control unit (8,9) on the side of the control input.

10. Actuating device (1) according to claim 9, in which the control unit (8) comprises a microprocessor (9) and a ripple counter (13) allocated thereto, which is started by the first detected current ripple ($R_1$).

**Revendications**

1. Procédé de traitement d'au moins une grandeur de moteur ($I_a$, $U_m$) d'un moteur à courant continu (2) commuté mécaniquement, alimenté par une tension continue de réseau de bord ($U_B$) d'un véhicule automobile, et faisant partie d'un dispositif de réglage (1) de ce véhicule, selon lequel on relève le courant d'induit ($I_a$) ainsi que la tension de moteur ($U_m$) du moteur à courant continu (2), et on détermine, à partir de la loi de variation dans le temps ($I_a(t)$)

du courant d'induit ($I_a$) , par comptage des ondulations de courant ($R_n$) qui y sont contenues, la position de réglage d'un élément de réglage (3), procédé

- d'après lequel pendant une phase initiale (10), au cours de laquelle le moteur à courant continu (2) à l'arrêt est alimenté en courant, on reproduit le courant d'induit ($I_a$) croissant avec le temps (t), grâce à une fonction déterminée à partir de paires de valeurs ($U_{m1,2}$, $I_{a1,2}$) de la tension de moteur ($U_{m1,2}$) et du courant d'induit ($I_{a1,2}$) relevées au cours d'un intervalle de temps ($\Delta t_{1,2}$), et on en extrapole une valeur de courant ($I_x$) du courant d'induit ($I_a$) attendue à un instant ultérieur ($t_3$) , et
- d'après lequel, dans le cas d'un écart ($\Delta I_{ax}$) du courant d'induit (Ia) relevé à cet instant ultérieur ($t_3$) par rapport au courant d'induit ($I_x$) extrapolé, on démarre un comptage d'ondulations pour relever les ondulations de courant ($R_n$), notamment la première ondulation de courant ($R_1$) produite lors du démarrage du moteur à courant continu (2).

2. Procédé selon la revendication 1, d'après lequel, à partir de deux paires de valeurs ($U_{m1,2}$, $I_{a1,2}$) de la tension de moteur ($U_{m1,2}$) et du courant d'induit ($I_{a1,2}$) relevées au cours de l'intervalle de temps ($\Delta t_{1,2}$), on détermine la résistance d'enroulement d'induit ($R_a$) et l'inductance d'enroulement d'induit (La) en vue de la détermination du courant d'induit ($I_x$) extrapolé pour l'instant ultérieur ($t_3$).

3. Procédé selon la revendication 1 ou la revendication 2,

- d'après lequel pendant une phase de démarrage et/ou de synchronisation (11) succédant à la phase initiale (10), le courant d'induit ($I_a$) est amené à un filtre de fréquence (16), qui peut être commandé et qui fournit un signal de sortie ($I_r$) proportionnel à la vitesse de rotation, et
- d'après lequel on transmet au filtre de fréquence (16) un signal de commande ($S'_f$) déterminé à partir de la tension contre-électromotrice (E) du moteur à courant continu (3), ainsi qu'un signal d'entrée de filtre ($I_f$) dérivé du signal de courant d'induit ($I_a$) et de la tension de moteur ($U_m$).

4. Procédé selon la revendication 3, d'après lequel la tension contre-électromotrice (E) est déterminée à partir de la tension de moteur ($U_m$) et du produit du courant d'induit ($I_a$) et de la résistance d'induit ($R_a$) .

5. Procédé selon l'une des revendications 2 à 4, d'après lequel on amène au filtre de fréquence (16) pouvant être commandé, un signal de commande ($S'_f$) ayant subi un filtrage passe-bas.

6. Procédé selon l'une des revendications 1 à 5, d'après lequel le moteur à courant continu (2) est commandé au moyen d'un signal de modulation de largeur d'impulsions ($S_{PWM}$), dont le rapport cyclique ($t_{on}/T_{PWM}$) est réglé en fonction de variations de tension de la tension continue de réseau de bord ($U_B$).

7. Procédé selon la revendication 6,

- d'après lequel, au regard du rapport entre la tension de référence ($U_R$) et d'une tension de filtre ($U_{Bf}$) , on règle un rapport cyclique ($t_{on}/T_{PWM}$) fixe du signal de modulation de largeur d'impulsions ($S_{PWM}$) ,
- d'après lequel la tension de filtre ($U_{Bf}$) correspond à la tension de réseau de bord nominale ($U_B$) , et
- d'après lequel, suivant l'écart de la tension continue de réseau de bord actuelle ($U_{inst}$) par rapport à la tension de filtre ($U_{Bf}$), on augmente ou on diminue le rapport cyclique ($t_{on1,2}/T_{PWM}$).

8. Dispositif de réglage (1) pour un véhicule automobile, comprenant un moteur à courant continu (2) commuté mécaniquement et alimenté par une tension continue de réseau de bord ($U_B$), ainsi qu'une unité de commande (8, 9) pour assurer la commande du moteur à courant continu (2), qui est conçu pour exécuter le procédé selon l'une des revendications 1 à 7.

9. Dispositif de réglage (1) selon la revendication 8, dans lequel le moteur à courant continu (2) est monté dans un circuit en pont fonctionnant en tant que convertisseur Buck ou abaisseur, entre deux branches de pont comportant chacune un commutateur à semi-conducteur ($T_I$, $T_3$) de potentiel élevé, et un commutateur à semi-conducteur ($T_2$, $T_4$) de potentiel bas, qui sont reliés, du côté entrée de commande, à l' unité de commande (8, 9) .

10. Dispositif de réglage (1) selon la revendication 9, dans lequel l'unité de commande (8) comprend un microprocesseur (9) et un compteur d'ondulations (13), qui lui est associé, et qui est démarré avec la première ondulation de courant ($R_1$) détectée.

FIG. 1

FIG. 2

**FIG. 3**

**FIG. 4**

**FIG. 5**

**FIG. 6**

**FIG. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010028736 A2